(19) Europäisches Patentamt / European Patent Office / Office européen des brevets

(11) **EP 3 139 816 B1**

(12) **EUROPEAN PATENT SPECIFICATION**

(45) Date of publication and mention
of the grant of the patent:
**24.02.2021 Bulletin 2021/08**

(21) Application number: **15716777.6**

(22) Date of filing: **14.04.2015**

(51) Int Cl.:
*A61B 5/00* (2006.01)          *H03B 5/12* (2006.01)
*H04B 5/00* (2006.01)          *H04B 5/02* (2006.01)
*H04B 13/00* (2006.01)        *G06K 7/08* (2006.01)
*G06K 7/10* (2006.01)          *G08C 17/04* (2006.01)

(86) International application number:
**PCT/EP2015/058071**

(87) International publication number:
**WO 2015/169549 (12.11.2015 Gazette 2015/45)**

(54) **ELECTROMAGNETIC FIELD INDUCTION FOR INTER-BODY AND TRANSVERSE BODY COMMUNICATION**

ELEKTROMAGNETISCHE FELDINDUKTION FÜR INTERSOMATISCHE UND TRANSVERSE KÖRPERKOMMUNIKATION

INDUCTION DE CHAMP ÉLECTROMAGNÉTIQUE POUR COMMUNICATION DE CORPS TRANSVERSALE OU ENTRE CORPS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.05.2014 US 201414270013**
**12.06.2014 US 201414302791**
**24.11.2014 US 201414551988**

(43) Date of publication of application:
**15.03.2017 Bulletin 2017/11**

(73) Proprietor: **NXP B.V.**
**5656 AG Eindhoven (NL)**

(72) Inventors:
• **GOMMÉ, Liesbeth**
**Redhill, Surrey RH1 1QZ (GB)**
• **KERSELAERS, Anthony**
**Redhill, Surrey RH1 1QZ (GB)**

(74) Representative: **Miles, John Richard**
**NXP SEMICONDUCTORS**
**Intellectual Property Group**
**Abbey House**
**25 Clarendon Road**
**Redhill, Surrey RH1 1QZ (GB)**

(56) References cited:
**EP-A1- 2 019 993**     **US-A1- 2008 262 376**
**US-B1- 6 211 799**

• **NAMJUN CHO ET AL: "A Planar MICS Band Antenna Combined With a Body Channel Communication Electrode for Body Sensor Network", IEEE TRANSACTIONS ON MICROWAVE THEORY AND TECHNIQUES, IEEE SERVICE CENTER, PISCATAWAY, NJ, US, vol. 57, no. 10, 1 October 2009 (2009-10-01), pages 2515-2522, XP011277442, ISSN: 0018-9480, DOI: 10.1109/TMTT.2009.2029952**
• **SHINAGAWA M ET AL: "A near field-sensing transceiver for intra-body communication based on a electro-optic effect", IMTC 2003. PROCEEDINGS OF THE 20TH. IEEE INSTRUMENTATION AND MEASUREMENT TECHNOLOGY CONFERENCE. VAIL, CO, MAY 20 - 22, 2003. VOLUME 1 AND 2; [IEEE INSTRUMENTATION AND MEASUREMENT TECHNOLOGY CONFERENCE. (IMTC)], NEW YORK, NY : IEEE, US, vol. 1, 20 May 2003 (2003-05-20), pages 296-301, XP001555041, ISBN: 978-0-7803-7705-9**

**Description**

**TECHNICAL FIELD**

Various exemplary embodiments disclosed herein relates generally to an electromagnetic induction radio.

**BACKGROUND**

There exist a variety of wireless systems which, illustratively, are used for short range distance communication. Some systems are used for communication around the human body; other systems may be used for communication in or around other objects. For example, currently RF based hearing aids are considered for wireless communication. Often such hearing aid systems operate in the 2.5 GHz ISM band. Such systems feature propagation by means of transverse waves, the magnetic and electric fields being in phase and covering a relatively large range of perhaps 30 meters. The large range may cause problems in terms of security of the communication content and may cause interference. Furthermore, because of their relatively high frequency of operation, such systems are heavily influenced by the human body.

Somewhat more conventional hearing aids employ magnetic field induction as a wireless communication method. Unfortunately, magnetic field induction based wireless systems have a limited range if the antenna is comparatively small, such as would be required in a hearing aid. Not all parts of the human body can be reached with magnetic field induction-based systems with small antennas. Consequently, it can be difficult to provide communication between a hearing aid and a hand-held control using such systems.

US 6,211,799 B1 (Post et al.) provides a system of transmitting and receiving electrodes. A pair of electrodes receives a signal, which is provided to full-wave rectifier, and produces power for a microcontroller. The microcontroller is also configured to apply an output signal to a series LC tank circuit to drive a further pair of electrodes to transmit a signal.

EP2019993B1 provides an RFID communication device. One form of communication provided by the device of EP2019993B1 involves reading and/or writing, by means of a magnetic coil. A second coil is provided in a second device, which may be a tag or be similar to the first device. EP2019993B1 foresees adding a capacitive link between the first device and the second device. Thus communication using the capacitive path and the communication using the magnetic path can occur simultaneously, without there being 'cross-talk' between the two communication paths.

**SUMMARY**

While several embodiments and/or examples have been disclosed in this description, the subject matter for which protection is sought is strictly and solely limited to those embodiments and/ or examples encompassed by the scope of the appended claims. Embodiments and/or examples mentioned in the description that do not fall under the scope of the claims are useful for understanding the invention.

In accordance with a first aspect of the invention, a transceiver comprising the features of appended independent claim 1 is provided. In accordance with a second aspect of the invention, a system comprising the features of appended independent claim 9 is provided. The dependent claims provide further details of embodiments of the invention.

An electromagnetic induction wireless communication system may include: a magnetic antenna; an electric antenna; a tuning capacitor coupled to the magnetic antenna configured to tune the magnetic antenna; a controller configured to control the operation of the communication system; a signal source coupled to the controller configured to produce a communication signal used to drive the magnetic antenna and the electric antenna; a voltage control unit coupled to the signal source configured to produce one of an amplitude difference, phase difference, and an amplitude and a phase difference between the communication signal used to drive the magnetic antenna and electric antenna.

**BRIEF DESCRIPTION OF THE DRAWINGS**

Reference is made to the accompanying drawings, wherein:

FIG. 1 illustrates a block diagram of a wireless communication system;
FIG. 2 illustrates a diagram of electrical and magnetic field lines during operation of the wireless communication system;
FIG. 3 illustrates the coupling capacitors CE1 and CE2 near a human body;
FIG. 4 illustrates block diagram of an electromagnetic induction radio;
FIG. 5 is a diagram illustrating comparative ranges of a communication system which uses magnetic field induction and a communication system using electromagnetic field induction;
FIG. 6 depicts a control and/or display unit;
FIG. 7 illustrates a block diagram of the wireless communication system using two bodies;

FIG. 8 illustrates a diagram of electrical and magnetic field lines during operation of the wireless communication system using two bodies;

FIG. 9 illustrates the coupling capacitors CE3 and CE4 near human bodies Body 1 and Body 2;

FIG. 10 illustrates a block diagram of the wireless communication system for use in between-inside-and-outside-of-body communication;

FIG. 11 displays the coupling capacitors CE5 and CE6 in case of between-inside-and-outside-of- body communication; and

FIG. 12 displays the between-inside-and-outside-of body communication simulation setup used to transmit to an outside receiver or to transmit to an inside receiver in case of the electromagnetic induction method described in FIG. 10.

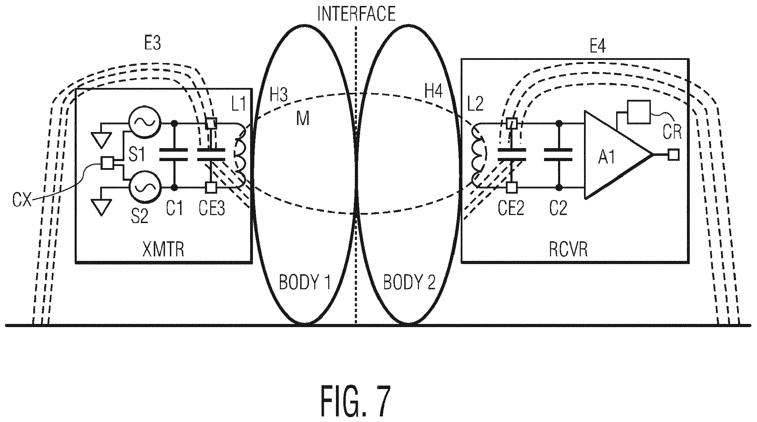

The invention concerns in particular the two living body embodiments of figures 7-9. However, the explanation accompanying the other drawings provides details useful for understanding the invention.

To facilitate understanding, identical reference numerals have been used to designate elements having substantially the same or similar structure and/or substantially the same or similar function.

## DETAILED DESCRIPTION

The description and drawings illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be for pedagogical purposes to aid the reader in understanding the principles of the invention and the concepts contributed by the inventor(s) to furthering the art, and are to be construed as being without limitation to such specifically recited examples and conditions. Additionally, the term, "or," as used herein, refers to a non-exclusive or (i.e., and/or), unless otherwise indicated (e.g., "or else" or "or in the alternative"). Also, the various embodiments described herein are not necessarily mutually exclusive, as some embodiments can be combined with one or more other embodiments to form new embodiments. As used herein, the terms "context" and "context object" will be understood to be synonymous, unless otherwise indicated.

A electromagnetic induction radio described herein improves the link budget and extends the communication range. The link budget is defined as,

$$\text{Link Budget [dB]} = 20 \log 10 \left(\frac{V_{Rx}}{V_{Tx}}\right),$$

where $V_{Tx}$ is the transmitter voltage on the transmitter antennas and $V_{Rx}$ is the received voltage on the receiver antennas.

In a related U.S. Patent Application No. 14/270,013 entitled "ELECTROMAGNETIC INDUCTION FIELD COMMUNICATION" filed on May 5, 2014 an electromagnetic communication method near a living body by means of a combination of a magnetic field and electric field with no intention to form transversal radiating waves is described. This results in a method that improves the link budget and extends the range to the complete living body and enables communication between devices near living bodies, including a first device connected to a first body and a second device connected to a second body such that the first device communicates with the second device, wherein the first and second bodies are connected through magnetic and electric near-field coupling. Even more than two bodies or propagating are possible, but the embodiments described herein will use two living bodies for simplicity. Multiple devices with transceivers are also possible, but the embodiments described herein will use two devices or transceivers for simplicity.

The magnetic field is generated by a current through a first coil. The electric field can be generated by a first coupling capacitor, having a first conducting plate coupled to the body and a second conducting plate coupled to the environment. The wireless communication system is not galvanically connected to the ground. The magnetic and electric field can be received by a receiver at another place near the body by means of a second coil and a second coupling capacitor, the second capacitor having a first conducting plate coupled to the body and a second conducting plate coupled to the environment.

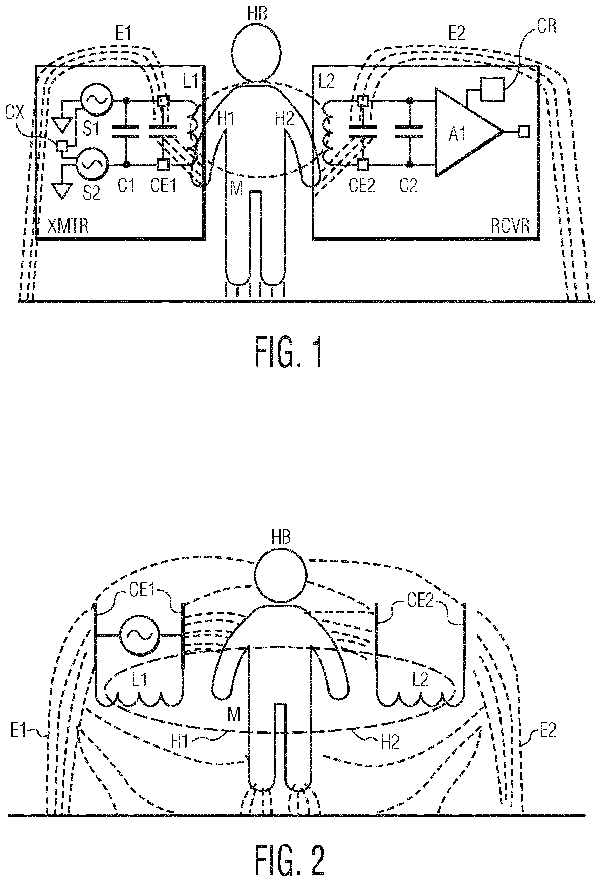

FIG. 1 illustrates a block diagram of the wireless communication system. FIG. 2 illustrates a diagram of electrical and magnetic field lines during operation of the wireless communication system. The wireless communication system of FIG. 1 includes a transmitter XMTR and receiver RCVR. Communication between transmitter XMTR and receiver RCVR is accomplished via a combination of an electric field and a magnetic field as will be further described. The transmitter XMTR and receiver RCVR are spaced apart from the human body HB by an exaggerated distance so that the electric field may be shown. The human body may be replaced by any other living body in FIG. 1, FIG. 2 and FIG. 3 Magnetic field H1 is generated by current through coil L1. An electric field E1 can be generated by a voltage on coupling capacitor CE1. Coupling capacitor CE1 has a first conducting plate coupled to the human body HB and a second conducting plate coupled to the environment as will be further illustrated below. Capacitors C1 and C2 are provided to resonate their respective circuits at the required operational frequency.

Magnetic field H1 and electric field E1 may be generated by the same voltage using sources S1 and S2. Accordingly, the sources S1 and S2 produce the communication signal to be transmitted. In this illustrative embodiment the sources S1 and S2 may generate a balanced voltage across the coil L1. However the voltage across the coil L1 may also be unbalanced and in this case only one source is required.

Magnetic field H1 and electric field E1 may be generated by the same voltage using sources S1 and S2. Accordingly, the sources S1 and S2 produce the communication signal to be transmitted. In this illustrative embodiment the sources S1 and S2 may generate a balanced voltage across the coil L1. However the voltage across the coil L1 may also be unbalanced and in this case only one source is required.

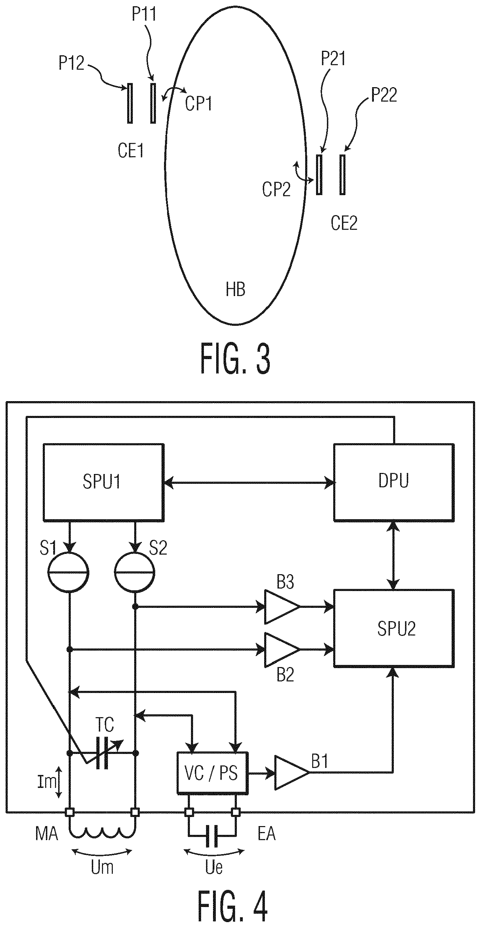

Magnetic field H2 and electric field E2 (which have different amplitudes than magnetic field H1 and electric field E1 respectively) may be received at a receiver RCVR positioned at another place near the human body (perhaps in the other ear) by means of a coil L2 and a coupling capacitor CE2. A signal detector A1 detects the signal received by the RCVR. Coupling capacitor CE2 has a first conducting plate coupled to the human body HB and a second conducting plate coupled to the environment as will be further illustrated in Fig. 3. Further, coils L1 and L2 may have a mutual inductance M.

FIG. 1 shows a transmitter XMTR and receiver RCVR that allows uni-directional communication. Both XMTR and RCVR may be also transceivers and bi-directional communication is thus made possible.

Not illustrated in detail are driving circuitry, signal processing circuitry, microphones, control circuitry, *etc.,* although such items may be viewed as embodied in blocks denoted by CX or CR in FIG. 1.

This wireless communication system communicates using a wireless electromagnetic field communication method near a human body. The electromagnetic induction fields are a combination of a magnetic field H1 and electric field E1 with no intention to form transversal radiating waves. The magnetic field H1 is generated by a magnetic antenna, a coil L1, while the electric field E1 is generated by a voltage on a coupling capacitor CE1. This coupling capacitor CE1 has a first conducting plate P11 coupled to the human body HB and a second conducting plate P12 coupled to the environment. The wireless system, including the transmitter XMTR and receiver RCVR, is not galvanically connected to the ground. It will be noted that the electric field lines E1 and E2 extend down the length of the human body HB.

A combination of a magnetic field and an electric field is created, and the electric field is present between the living body and the environment. The magnetic induction field decreases with 60db per decade distance from the source in air, however the electric induction field decreases with less than 60db per decade of the distance from the source.

The magnetic field H2 and electric field E2 can be received by a receiver at another place near the human body by means of a coil L2 and a coupling capacitor CE2, the coupling capacitor CE2 having a first conducting plate P21 coupled to the human body and a second conducting plate P22 to the environment.

In the embodiments discussed, the coils and coupling capacitors are so small that (i.e. less than about 5% of the wavelength of the electric E1 and E2 and magnetic H1 and H2 fields, that there is not significant generation of undesired transverse radiating waves.

In an embodiment, coils L1 and L2 are unscreened and smaller (ideally much smaller) than the chosen wavelength of operation. The capacitors CE1 and CE2 each have one conducting surface, *i.e.,* P11 and P22 in FIG. 3, which is close to or in contact with a body, illustratively, a human body HB. The opposing surfaces, *i.e.,* plates P12 and P22 of FIG. 3 are closer to the environment than the human body HB, and the size of the plates are smaller (ideally much smaller) than the chosen wavelength of operation. Plates P12 and P11 are preferably parallel and have the same shape, but it is also permissible that the plates are of different size and only partially parallel (i.e. somewhat non-parallel) or side by side. The same is true for plates P21 and P22.

FIG. 3 illustrates the coupling capacitors CE1 and CE2 near a human body HB. The conductive plate P11 of coupling capacitor CE1 is coupled with the human body HB. The conductive plate P12 of coupling capacitor CE1 is coupled to the environment. The conductive plate P21 of coupling capacitor CE2 is coupled with the human body HB at another position. The conductive plate P22 of coupling capacitor CE2 is coupled to the environment. CE1 has a coupling factor CP1, and CE2 has a coupling factor CP2. The coupling factor CP1 and CP2 play a role in the link budget of the communication system.

Plates P11, P12, P21, and P22 may be made from conductive material, for example metal. In general, plates P11, P12, P21, and P22 may have a variety of shapes and may be surrounded by dielectric material so that the overall structure of CE1 and CE2 performs a capacitive function. In general, the dimensions of capacitors CE1 and CE2 should be small relative to the wavelength of operation.

However different applications may require a composition of electric and magnetic fields of different amplitudes and phase between them. Therefore a system is described below that may be integrated in a RF integrated circuit and that is suitable to generate a blending of field amplitudes and phase that may be programmed to be specifically suited for various applications. The blending can be continuously adaptable. In order to understand the effects of different amplitudes and phases between the electric and magnetic fields various tests and measurements were done. The results of these tests are discussed below and provide insight as to the benefits of varying the amplitudes and phases between the electric and magnetic fields.

By way of example, if capacitors CE1 and CE2 are approximately 10 pF in value (which is somewhat defined by coupling capacitor design), while coils L1 and L2 are be approximately 3.7 $\mu$H, then some extra capacitance may be required to tune the circuit to the desired operational frequency, for example 10.6 MHz. Consequently the values of capacitors C1 and C2 are approximately 50.96 pF. In an example, capacitors C1 and C2 are a capacitor bank which may be integrated into an RF integrated circuit that is adjustable to resonate at the required frequency. The adjustability compensates for the added capacitance due to the human body.

From measurements it was found that the link budget for the electromagnetic induction system can be changed. Different link budget values can be obtained by means of varying the phase and amplitude of the magnetic and the electric field that is generated by the wireless communication system. Thus a system that varies the amplitude and phase of the voltage applied to the coil antenna and the capacitor antenna may be used to improve the performance of the wireless communication system.

FIG. 4 illustrates a block diagram of an electromagnetic induction radio. The electromagnetic induction radio (EIR) may include a digital processing unit DPU, signal processing units SPU1 and SPU2, signal generators S1 and S2, buffers B1, B2, and B3, a tuning capacitor TC, a voltage processing unit VC/PS, an magnetic antenna coil MA, and an electric antenna capacitor EA.

The digital processing unit DPU may control the operation of the EIR and processes the signals related to the communication. The digital processing unit may contain analog digital converters (ADC) and/or digital analog convertors (DAC), memory, storage, and all the hardware and software required to process the communication signals. The digital processing unit may include a processor that may be any hardware device capable of executing instructions stored in a memory or other storage or otherwise processing data. As such, the processor may include a microprocessor, field programmable gate array (FPGA), application-specific integrated circuit (ASIC), or other similar devices. The memory may include various memories such as cache or system memory. As such, the memory may include static random access memory (SRAM), dynamic RAM (DRAM), flash memory, read only memory (ROM), or other similar memory devices. The storage may include one or more machine-readable storage media such as read-only memory (ROM), random-access memory (RAM), magnetic disk storage media, optical storage media, flash-memory devices, or similar storage media. In various embodiments, the storage may store instructions for execution by the processor or data upon with the processor may operate. For example, the storage may store a base operating system for controlling various basic operations of the hardware. It may also store data received and processed by the EIR. Also, the storage my include instructions used to process the data received by the EIR.

Signal processing units SPU1 and SPU2 may contain the required hardware to interface to the antenna circuitry MA and EA and the digital processing unit DPU. SPU1 and SPU2 may include a processor that may be any hardware device capable of executing instructions stored in a memory or other storage or otherwise processing data. As such, the processor may include a microprocessor, a signal processor, graphics processor, field programmable gate array (FPGA), application-specific integrated circuit (ASIC), or other similar devices. The signal processing unit SPU1 may help implement the transmitter function while the signal processing unit SPU2 may help implement the receiver function. In such a case the EIR may have a transceiver functionality and thus may be able to perform bidirectional communication.

In a transmitter mode, the magnetic field Um is generated by a first alternating current $I_m$ through a magnetic antenna, coil MA, while the electric field Ue is generated by a second alternating voltage $V_e$ on the electric antenna capacitor EA. The current $I_m$ through the coil MA is dependent on the voltage on the coil:

$$I_m = V_m/Z_{coil},$$

$$Z_{coil} = 2\pi f L_{coil}$$

The two voltages $V_m$ and $V_e$ thus define the magnetic and electric fields Um and Ue respectively. Changing one of the amplitudes of $V_m$ and $V_e$ or the phase between them, changes the combination of the magnetic field Um and electric field Ue and thus blending of the fields may be done in order to improve the performance of the wireless communication system.

Signal processing unit SPU1 may command signal generators S1 and S2 to produce currents that drive the resonating circuit formed by coil MA and tuning capacitor TC. Accordingly, the sources S1 and S2 produce the communication signal to be transmitted. The sources S1 and S2 may generate a balanced voltage across MA
However the voltage across MA may also be unbalanced and in this case only one source is required. TC is an integrated capacitor bank that may be adjusted by the digital processing unit DPU to tune the receiver/transmitter. The resonating frequency can be chosen in one of the industrial, scientific, and medical (ISM) bands, for example 10.6MHz. The resonating circuit may have a bandwidth that is sufficient for the required communication mode data rate. Optionally the bandwidth may be adapted by means of inserting additional loss in the resonating circuit using, for example, a resistor bank which may have an adjustable resistance. This may be an additional functional block in the EIR.

The voltage $V_m$ on the magnetic antenna MA is processed in the voltage processing unit VC/PS and further applied to the electric antenna EA. The VC/PS produces a voltage $V_e$ that is applied to the electric antenna EA. The VC/PS may reduce or increase the input voltage $V_e$ relative to $V_m$. The VC/PS may additionally also change the phase between $V_m$ and $V_e$. In this way the composition of magnetic and electric fields may be changed according to the needs of the application. Alternatively the voltage Ve that is applied to the electric antenna EA is processed in the voltage processing unit VC/PS and further applied to the magnetic antenna MA. The VC/PS produces a voltage Vm that is applied to the magnetic antenna MA. The VC/PS may reduce or increase the input voltage $V_m$ relative to $V_e$. The VC/PS may additionally also change the phase between $V_e$ and $V_m$. In this way the composition of magnetic and electric fields may be changed according to the needs of the application.

In the receive mode the voltage received by the magnetic antenna MA may be combined with the voltage received by the electric antenna EA. Before combining both signals the phase and/or amplitude between them may be adapted.

For example, when both signals are combined in a parallel tuned circuit, the amplitude of the induced antenna voltages should have a 180 degree phase shift between them to generate an optimal combined output signal. This may not always be desirable for all applications due to antenna design and positioning at the human body. Moreover the phase between them may change dynamically and the VC/PS may continuously respond to such changes.

The signal processing unit SPU2 may process the received voltages from the antennas MA and EA. It is noted that the VC/PS may have bidirectional functionality. The signal at the resonating circuit formed by TC and MA may be buffered by buffers B2 and B3. An additional buffer B1 may be available to monitor the difference between received magnetic and electric field strength. Alternatively, the receiver and transmitter can also have separate receive and transmit VC/PS.

The DPU may adjust the amplitude and phase characteristics between the electric and magnetic fields used to implement communication between a transmitter and a receiver. Information regarding the communication environment may be based upon various collected test data. Also, test measurements may be made for each individual user of the communication system. Further, various channel measurement signals may be included as part of the communication signal in order to determine variations in the communication channel during the operation of the wireless communication system. These channel measurements may then be used to adjust the phase and amplitude between the magnetic and electric fields. Further, feedback loops may be used to further monitor and adjust the phase and amplitude of between the magnetic and electric signals.

The EIR may be implemented as a combination of different integrated circuits (ICs) or on a single IC. Further, the DPU, SPU1, and SPU2 are shown as separate physical and functional blocks in FIG. 4, but the DPU, SPU1, and the SPU2 may be implemented in a single processor which may be its own IC. Also, SPU1 and SPU2 may be implemented on a single signal processing unit which may be its own IC. The DPU or the combination of the DPU, SPU1, and SPU2 may be called a controller that controls the operation of the EIR.

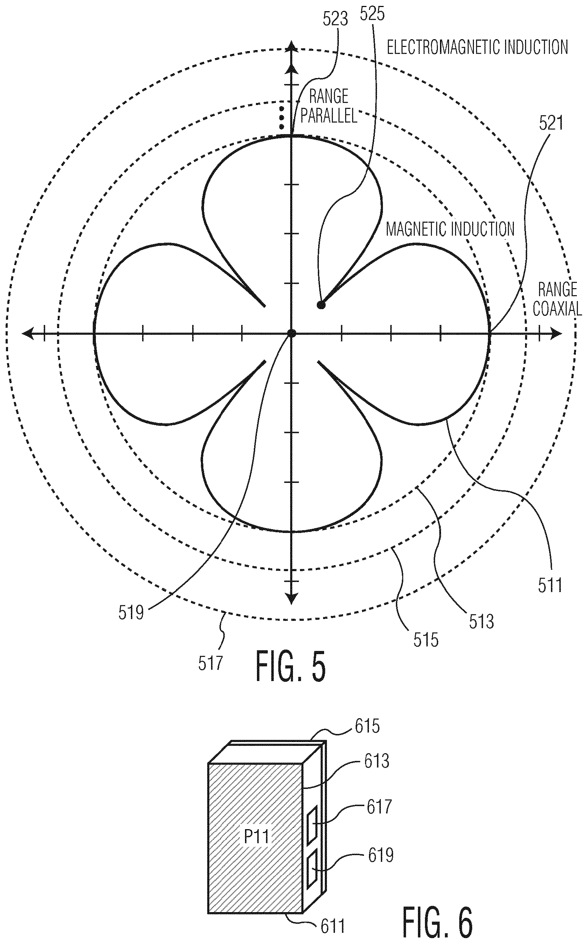

FIG. 5 is a diagram illustrating comparative ranges of a communication system which uses magnetic field induction and a communication system. In FIG. 5, the horizontal axis indicates directivity when coils L1 and L2 are coaxial; the vertical axis indicates directivity when coils L1 and L2 are parallel. The directivity in case of a link using the magnetic field induction method is illustrated by line 511. It will be noted that the range drops significantly when moving from the case where both coils are coaxial to the case where coils are parallel. Using the diagram of FIG. 5, if the transmit coil L1 of FIG. 1 were located at the origin 519 of FIG. 5, one can see that the receiver coil L2 can be placed in either location 521 or 523 (which correspond, respectively, to a coaxial orientation with respect to the transmitter coil L1 or a parallel orientation with respect to transmitter coil L1) and best-case detection of the magnetic field generated by transmit coil L1 will be achieved. However, if the receiver coil L2 is positioned along a line which is oriented at forty five degrees between locations 521 and 523, (*i.e.* at location 525), the receiver coil must be placed substantially closer to the transmitter coil L1 for adequate detection to occur. The disclosed example, however exhibits a more omnidirectional range profile and possibly greater range. The omnidirectional profile and possibly greater range in case of a link using electromagnetic induction fields facilitate more robust communication.

There may be a separate control and/or display unit. FIG. 6 depicts a control and/or display unit 611. Control and/or display unit 611 has two plates 613 and 615 on opposite sides. Control and/or display unit 611 may be held in the hand of a user. One of the plates, 613 or 615 will be held more securely in the hand than the other and will therefore be more strongly coupled to the user's body, while the other plate will have a somewhat stronger coupling to the environment. Control and/or display unit 611 is capable of communicating with transmitter XMTR or receiver RCVR Illustratively, control and/or display unit may, in combination, or individually, provide: volume control; noise reduction control; human body parameters such as heart rate, and other items such as physical parameters monitored around the body. Operation of the control and/or display unit is facilitated by the electromagnetic induction fields. Dimensioning and parallelism are similar to that described for plates P12 and P22 above. Control and/or display unit may have a display, and internal circuitry, 619, similar to either transmitter XMTR or receiver RCVR (or may have internal circuitry which is a transceiver as previously described).

Next embodiments related to inter-body (between bodies) wireless communication devices that are using frequency bands from 0.1MHz to 100MHz will be described. A between-inside-and-outside-of-body wireless communication device is also described.

The method of inter-body communication is useful for products for secure communications/transactions, where for example the identity of one human body is verified by skin contact to a second human body using an mainly electric field where after secure data transmission can occur using a mainly magnetic field. For example two people may be wearing devices that can communicate to one another to exchange information when the two people shake hands. However communication is possible between devices near bodies comprising a first device connected to a first body and a second device connected to a second body such that the first device communicates with the second device, wherein the first and second bodies are connected through magnetic and electric near-field coupling.

Even more than two bodies or devices are possible, but the embodiments described herein will use two living bodies for simplicity. Multiple transceivers are also possible, but the embodiments described herein will use two transceivers for simplicity.

The method for between-inside-and-outside-of-body communication provides communication from inside the body to outside the body and vice versa and is useful for products that are implanted in a living body and need to communicate with another node located outside of the living body close to the body's surface. An application can be (re)programming of the implanted electronics with communication through tissue. Another application may include communication from an implanted device for heart attack prediction to a wearable monitoring device.

These methods take advantage of the above described electromagnetic communication methods, where an electromagnetic communication method uses the combination of a magnetic field and electric field with no intention to form transversal radiating waves. These electromagnetic communication methods will improve the link budget and make the wireless connection more robust for both inter-body communication and between-inside-and-outside-of-body communication.

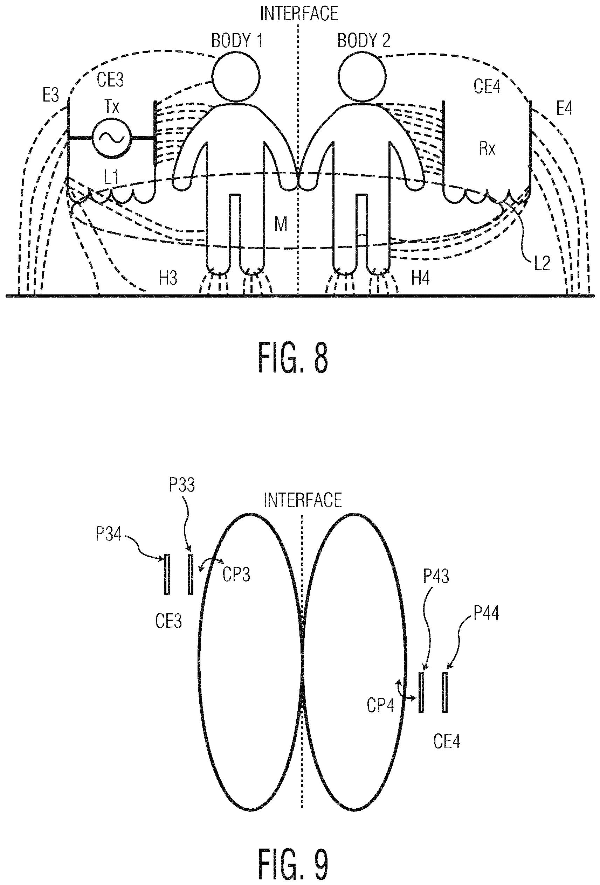

FIG. 7 illustrates a block diagram of the wireless communication system using two bodies. FIG. 8 illustrates a diagram of electrical and magnetic field lines during operation of the wireless communication system using two bodies. The wireless communication system of FIG. 7 is similar to that of FIG. 1. Similar labels will be used to those of FIG. 1. The wireless communication system of FIG. 7 includes a transmitter XMTR and receiver RCVR. Communication between transmitter XMTR and receiver RCVR is accomplished via a combination of an electric field and a magnetic field as will be further described. The transmitter XMTR may be in contact with or close to a first human body Body 1. The receiver RCVR may be in contact with or close to a second human body Body 2. The transmitter XMTR and receiver RCVR are spaced apart from the human bodies Body 1 and Body 2 by an exaggerated distance so that the electric field may be shown. Magnetic field H3 is generated by current through coil L1. An electric field E3 may be generated by a voltage on coupling capacitor CE3. Coupling capacitor CE3 has a first conducting plate coupled to the first human body Body 1 and a second conducting plate coupled to the environment as will be further illustrated below. Capacitors C1 and C2 are provided to resonate their respective circuits at the required operational frequency.

As shown in FIG. 8, magnetic field H3 and electric field E3 may be generated by the same voltage using sources S1 and S2. Accordingly, the sources S1 and S2 produce the communication signal to be transmitted. In this illustrative embodiment the sources S1 and S2 may generate a balanced voltage across the coil L1. However the voltage across the coil L1 may also be unbalanced and in this case only one source is required.

Magnetic field H4 and electric field E4 (which have a different amplitudes than magnetic field H3 and electric field E3 respectively) may be received at a receiver RCVR positioned at another place near the second human body Body 2 by means of a coil L2 and a coupling capacitor CE4. Coupling capacitor CE4 has a first conducting plate coupled to the second human body Body 2 and a second conducting plate coupled to the environment as will be further illustrated in Fig. 9. Further, coils L1 and L2 have a mutual inductance M.

FIG. 7 shows an illustrative embodiment of a transmitter XMTR and receiver RCVR that allows uni-directional communication. In another embodiment, both XMTR and RCVR may be also transceivers and bi-directional communication is thus made possible.

Not illustrated in detail are driving circuitry, signal processing circuitry, microphones, control circuitry, *etc.,* although such items may be viewed as embodied in blocks denoted by CX or CR in Fig. 7.

This wireless communication system communicates using an electromagnetic field communication method near a human body. The electromagnetic induction fields are a combination of a magnetic field H3 and electric field E3 with no intention to form transversal radiating waves. The magnetic field H3 is generated by a magnetic antenna, a coil L1, while the electric field E3 is generated by a voltage on a coupling capacitor CE3. This coupling capacitor CE3 has a first conducting plate P33 coupled to the first human body Body 1 and a second conducting plate P34 coupled to the environment. The wireless system, including the transmitter XMTR and receiver RCVR, is not galvanically connected to the ground. It will be noted that some of the electric field lines E3 and E4 extend down the length of the human bodies Body 1 and Body 2.

A combination of a magnetic field and an electric field is created, and the electric field is present between the human bodies and the environment. The magnetic induction field decreases with 60db per decade of the distance from the source in air, however the electric induction field decreases less than 60db per decade of the distance.

The magnetic field H4 and electric field E4 may be received by a receiver RCVR at another place near the second human body by means of a coil L2 and a coupling capacitor CE4, the coupling capacitor CE4 having a first conducting plate P43 coupled to the human body and a second conducting plate P44 to the environment.

FIG. 9 illustrates the coupling capacitors CE3 and CE4 near human bodies Body 1 and Body 2. The conductive plate P33 of coupling capacitor CE3 is coupled with the first human body Body 1. The conductive plate P34 of coupling capacitor CE3 is coupled to the environment. The conductive plate P43 of coupling capacitor CE4 is coupled with the second human body Body 2. The conductive plate P44 of coupling capacitor CE4 is coupled to the environment. CE3 has a coupling factor CP3, and CE4 has a coupling factor CP4. The coupling factor CP3 and CP4 play a role in the link budget of the communication system.

Plates P33, P34, P43, and P44 may be made from conductive material, for example metal. In general, plates P33, P34, P43, and P44 may have a variety of shapes and may be surrounded by dielectric material so that the overall structure of CE3 and CE4 performs a capacitive function. In general, the dimensions of capacitors CE3 and CE4 should be small relative to the wavelength of operation.

Four test cases were developed and performed. The four test cases were used for the link budget measurements of inter-body communication. The first test case includes two human bodies wearing wrist devices. The first human body on the left wears the transmit device on the right wrist, and the second human body on the right wears the receiver device on the left wrist. The on-body distance is the largest in this test case.

The second test case shows two human bodies wearing wrist devices. The first human body on the left wears the transmit device on the left wrist, and the second human body on the right wears the receiver device on the right wrist. The on-body distance is the shortest in this test case.

The third test case includes two human bodies, one wearing a wrist device and another wearing the device on the upper arm. The first human body on the left wears the receiver device on the left wrist, and second human body on the right wears the transmit device on the upper arm. The on-body distance for the third case is about the average of all of the test cases.

The fourth test case shows two human bodies, one wearing a wrist device and another wearing the device at a hearing aid location. The first human body on the left wears the receiver device on the left wrist, and the second human body on the right wears the transmit device at the right ear. The on-body distance for the fourth case is about average of all the test cases.

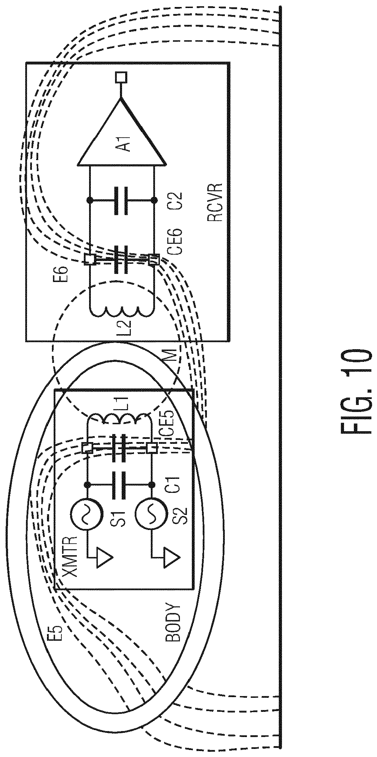

Table 1 below displays link budget measurements at 10.6 MHz of a prior art magnetic induction method (MI) and the electromagnetic induction method (EMI) according an embodiment in the intra-body communication mode. In all test cases one coupling plate of both coupling capacitors was isolated from the human body by means of clothes with a thickness of 2 to 3mm. The transmitter and receiver antennas are a combination of a ferrite coil and a coupling capacitor. The ferrite coil having 2mm diameter and 7mm length with an inductance of 3.7uHenry; the coupling capacitor having dimensions of 2 by 3cm surface area and 4mm distance between the conducting plates, the area between them is air with a capacitance of 12pFarad. The RX voltage is measured across the receiving antennas that are connected in parallel with each other as shown in Figure 10. The noise floor of our measuring set-up has been found 24 uV.

Table 1

| Inter-body communication: 2 human bodies | | |
|---|---|---|
| test case and constraints | Rx Voltage [uV] | Link budget [dB] |
| *arm 2 arm communication between user 1 and user 2 2 wrist devices (long on-body distance)* | | |
| MI<br>EMI | Below noise floor<br>26 | -<br>-99 |
| *2 wrist devices (short on-body distance), coils are coaxial* | | |
| MI | 2027 | -61 |

(continued)

| Inter-body communication: 2 human bodies | | |
|---|---|---|
| test case and constraints | Rx Voltage [uV] | Link budget [dB] |
| EMI | 7112 | -51 |
| | | |
| *user 1: wrist device and user 2: upper arm patch device* | | |
| MI<br>EMI | Below noise floor<br>88 | -<br>-89 |
| | | |
| *user 1: wrist device and user 2: hearing aid* | | |
| MI<br>EMI | Below noise floor<br>51 | -<br>-93 |

From table 1 it can be seen that the received voltage is higher when the EMI method is used for inter-body communication compared to the magnetic field induction method in all test cases and thus a more robust communication is provided.

The test cases 1, 3 and 4 show a received voltage readout that is below the noise floor for the magnetic field induction communication method. In all cases the EMI produced measurements that allowed for communication across two bodies.

FIG. 10 illustrates a block diagram of the wireless communication system for use in between-inside-and-outside-of-body communication. Here the transmitter XMTR is shown inside the body, and the RCVR is shown outside the body. The transmitter XMTR and receiver RCVR may operate like the transmitters and receivers described above. The RCVR may include signal detector A1 detects the signal received by the RCVR as described above. Again non-radiating magnetic and electric fields are used to allow for communication between the transmitter XMTR and the receiver RCVR. The coupling capacitors CE5 and CE6 produce and detect the electric fields E5 and E6 similar to the descriptions above. Also, a magnetic field produced by the coil L1 may be detected by the coil L2 similar to the descriptions above. Also, as described above the transmitter XMTR and receiver RCVR may also be transceivers that both transmit and receive signals.

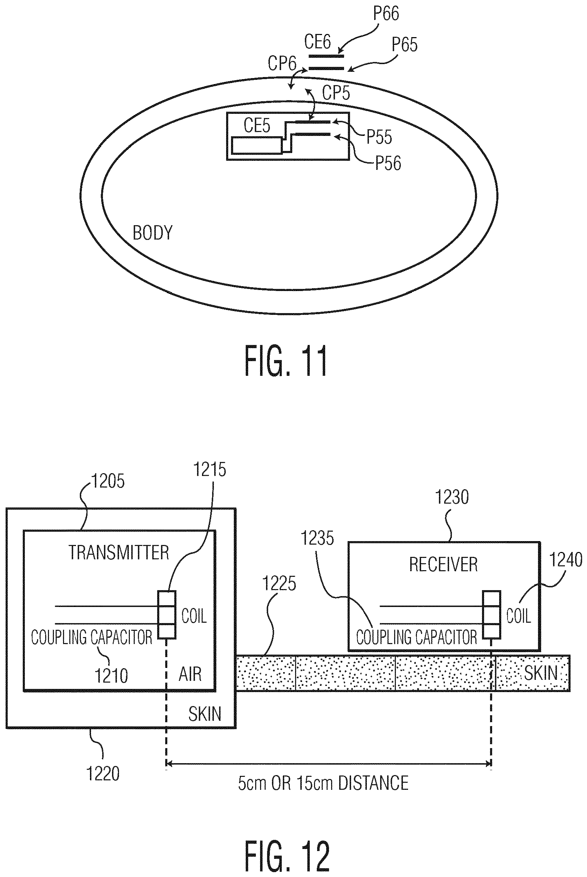

FIG. 11 displays the coupling capacitors CE5 and CE6 in case of between-inside-and-outside-of- body communication. The conductive plate P55 of coupling capacitor CE5 is coupled with the inside of the body. The conductive plate P56 of coupling capacitor CE5 is coupled to electronic unit inside the body. The conductive plate P65 of coupling capacitor CE6 is coupled with the outside of the body. The conductive plate P66 of coupling capacitor CE6 is coupled to the environment. As before, the coupling factors CP5 and CP6 play a role in the link budget of the communication system.

FIG. 12 displays the between-inside-and-outside-of body communication simulation setup used to transmit to an outside receiver or to transmit to an inside receiver in case of the electromagnetic induction method described in FIG. 11. When simulating the prior art magnetic induction method the plate capacitors at the receiver and transmitter are removed. The test set up includes a transmitter 1205 that includes a coupling capacitor 1210 and a coil 1215. The transmitter 1205 is enclosed in a body structure 1220 made of a biological material and a material modeling skin. Further attached to the body structure 1220 is a skin extension 1225 also made of a biological material and a material modeling skin. A receiver 1230 is then attached to the skin extension 1225. The receiver 1220 includes a coupling capacitor 1235 and coil 1240.

As shown the transmitting (or receiving) device is placed in the interior of body structure 1220. The receiver (or transmitter) is then moved horizontally over the surface of the skin extension 1225 resulting in a 5cm and a 15cm communication link distance. A 3-D electromagnetic simulation of the link budget at 10.6MHz was performed comparing the prior art magnetic induction method and the electromagnetic induction method with the between-inside-and-outside-of-body communication mode. The following four scenarios were simulated: 1) parallel coils with a 5 cm link distance with Tx inside and Rx outside; 2) parallel coils with a 15 cm link distance with Tx inside and Rx outside; 3) parallel coils with a 5 cm link distance with Tx outside and Rx inside; 4) parallel coils with a 15 cm link distance with Tx outside and Rx inside. The link budget of the magnetic induction method was chosen as the reference value and the difference in link budget was then compared to the electromagnetic induction method. In each of the test cases, the EMI method showed a 4dB increase in link budget versus the MI method. In addition, in the between-inside-and-outside-of-body communication method, the directivity limitation of a magnetic induction link is removed.

It should be appreciated by those skilled in the art that any block diagrams herein represent conceptual views of illustrative circuitry embodying the principles of the invention. Further, in the circuits shown additional elements may also be included as needed, or variations to the structure of the circuit may be made to achieve the same functional results as the circuits illustrated.

Although the various exemplary embodiments have been described in detail with particular reference to certain exemplary aspects thereof, it should be understood that the invention is capable of other embodiments and its details are capable of modifications in various obvious respects. As is readily apparent to those skilled in the art, variations and modifications can be effected while remaining within the scope of the invention. Accordingly, the foregoing disclosure, description, and figures are for illustrative purposes only.

**Claims**

1.    An electromagnetic induction wireless transceiver comprising:

a magnetic antenna comprising a coil (LI);
an electric antenna comprising a capacitor (CE3) including first (P33) and second (P44) plates, the coil (L1) connected in parallel with the capacitor (CE3), the first plate (P33)] being able to be positioned adjacent to and coupled to a first living body (BODY1); and
a signal source (S1) configured to produce a generated communication signal used to drive the magnetic antenna to produce a generated magnetic field (H3) and to drive the electric antenna to produce a generated electric field (E3),
the transceiver further comprising a tuning capacitor (C1) coupled to an antenna combination configured to tune the antenna combination, wherein the antenna combination includes the magnetic antenna and the electric antenna,
wherein the transceiver, when positioned adjacent and coupled to the first living body (BODY1), is configured to communicate with another electromagnetic induction wireless transceiver adjacent to and coupled to a second living body (BODY2),
wherein the first (BODY1) and second (BODY2) living bodies are connected through magnetic and electric near-field coupling,
thereby producing a received electric field (E4) at the another transceiver, and
a received magnetic field (H4) at the another transceiver.

2.    The transceiver of claim 1, wherein there is no galvanic connection between the transceiver and ground.

3.    The transceiver of any preceding claim, further comprising a voltage control unit coupled to the signal source (S1) configured to produce one of an amplitude difference, phase difference, and an amplitude and a phase difference between the communication signals used to drive the magnetic antenna and electric antenna.

4.    The transceiver of claim 3, further comprising a controller including a data processing unit and signal processing unit, wherein the controller controls the operation of the voltage control unit.

5.    The electromagnetic induction wireless transceiver of any previous claim, further comprising:
a signal detector (A1) configured to detect a received communication signal carried via another received magnetic field received on the magnetic antenna and another received electric field received on the electric antenna.

6.    The transceiver of any previous claim, wherein the generated magnetic field (H3) and the generated electric field (E3) are generated by a same voltage signal.

7.    The transceiver of any previous claim, wherein the transceiver is implemented in a hearing aid device.

8.    The transceiver of any previous claim, wherein the transceiver is implemented in a wrist device.

9.    An electromagnetic induction wireless communication system comprising a transmitter and a receiver, wherein the transmitter comprises:

a magnetic antenna comprising a coil (LI);

an electric antenna comprising a capacitor (CE3) including first (P33) and second (P34) plates, the coil (L1) connected in parallel with the capacitor (CE3), the first plate (P33) being able to be positioned adjacent to and coupled to a first living body (BODY1);

a signal source configured to produce a generated communication signal used to drive the magnetic antenna to produce a generated magnetic field (H3) and to drive the electric antenna to produce a generated electric field (E3); and

the transmitter further comprising a tuning capacitor (C1) coupled to an antenna combination configured to tune the antenna combination, wherein the antenna combination includes the magnetic antenna and the electric antenna,

wherein the transmitter, when positioned adjacent to and coupled to the first living body (BODY1), is configured to communicate with the receiver of the electromagnetic induction wireless communication system, when the receiver is positioned adjacent and coupled to a second living body (BODY2),

wherein the first (BODY1) and second (BODY2) living bodies are connected through magnetic and electric near-field coupling,

wherein the generated electric field (E3) is coupled to the first living body (BODY1), thereby producing a received electric field (E4) at the receiver, and

a received magnetic field (H4) at the receiver; and

wherein the receiver comprises:

a second magnetic antenna comprising a second coil (L2);

a second electric antenna comprising a second capacitor (CE2) including first (P43) and second (P44) plates, the second coil (L2) connected in parallel with the second capacitor (CE2), the first plate (P43) of the second capacitor (CE2) being able to be positioned adjacent to and coupled to the second living body (BODY2); and

a signal detector (A1) configured to detect a received communication signal from the transmitter via the received magnetic field (H4) received by the second magnetic antenna, and the received electric field (E4) received by the second electric antenna by coupling the first plate (P43) of the second capacitor (CE2) to the second (BODY2) living body, and

wherein the second coil (L2) is configured to receive the received magnetic field (H4).

10. The system of claim 9, wherein there is no galvanic connection between the transmitter and ground.

11. The system of claim 9 or claim 10, the transmitter further comprising:

a voltage control unit coupled to the signal source (S1) configured to produce one of an amplitude difference, phase difference, and an amplitude and a phase difference between the communication signals used to drive the magnetic antenna and electric antenna; and

a controller including a data processing unit and signal processing unit, wherein the controller controls the operation of the voltage control unit.

12. The system of any of claims 9-11, wherein the receiver further comprises a tuning capacitor (C2) coupled to an antenna combination configured to tune the antenna combination, wherein the antenna combination includes the second magnetic antenna and the second electric antenna.

13. The system of any of claims 9-12, wherein there is no galvanic connection between the receiver and ground.

14. The system of claim 11, wherein:

the signal source (S1) comprises a first signal generator and a second signal generator (S2), wherein the first and second signal generators are configured to generate a balanced voltage signal applied to the magnetic antenna.

15. The system of claim 14, wherein the voltage control unit is configured to produce a second voltage signal based on the balanced voltage signal, the second voltage signal applied to the electric antenna.

**Patentansprüche**

1. Drahtlos-Sender/Empfänger mit elektromagnetischer Induktion, der Folgendes umfasst:

   eine magnetische Antenne, die eine Spule (L1) umfasst;
   eine elektrische Antenne, die einen Kondensator (CE3) umfasst, der erste (P33) und eine zweite (P44) Platte enthält, wobei die Spule (L1) zu dem Kondensator (CE3) parallelgeschaltet ist, die erste Platte (P33) benachbart zu einem ersten lebenden Körper (BODY1) positioniert und mit ihm gekoppelt sein kann; und
   eine Signalquelle (S1), die konfiguriert ist, ein erzeugtes Kommunikationssignal zu produzieren, das verwendet wird, um die magnetische Antenne anzusteuern, ein erzeugtes Magnetfeld (H3) zu produzieren, und die elektrische Antenne anzusteuern, ein erzeugtes elektrisches Feld (E3) zu produzieren,
   wobei der Sender/Empfänger ferner einen Abstimmkondensator (C1) umfasst, der mit einer Antennenkombination gekoppelt ist, der konfiguriert ist, die Antennenkombination abzustimmen, wobei die Antennenkombination die magnetische Antenne und die elektrische Antenne enthält,
   wobei der Sender/Empfänger, wenn er benachbart zu dem ersten lebenden Körper (BODY1) positioniert und mit ihm gekoppelt ist, konfiguriert ist, mit einem weiteren Drahtlos-Sender/Empfänger mit elektromagnetischer Induktion, der benachbart zu einem zweiten lebenden Körper (BODY2) und mit ihm gekoppelt ist, zu kommunizieren,
   wobei der erste (BODY1) und der zweite (BODY2) lebende Körper über magnetische und elektrische Nahfeldkopplung gekoppelt sind,
   und dadurch ein empfangenes elektrisches Feld (E4) bei dem weiteren Sender/Empfänger produzieren und ein empfangenes Magnetfeld (H4) bei dem weiteren Sender/Empfänger produzieren.

2. Sender/Empfänger nach Anspruch 1, wobei keine galvanische Verbindung zwischen dem Sender/Empfänger und Masse vorhanden ist.

3. Sender/Empfänger nach einem der vorhergehenden Ansprüche, der ferner eine Spannungssteuereinheit umfasst, die mit der Signalquelle (S1) gekoppelt ist, die konfiguriert ist, eines aus einer Amplitudendifferenz, einer Phasendifferenz und einer Amplituden- und einer Phasendifferenz zwischen den Kommunikationssignalen, die verwendet werden, um die magnetische Antenne und die elektrische Antenne anzusteuern, zu produzieren.

4. Sender/Empfänger nach Anspruch 3, der ferner eine Steuereinheit umfasst, die eine Datenverarbeitungseinheit und eine Signalverarbeitungseinheit enthält, wobei die Steuereinheit den Betrieb der Spannungssteuereinheit steuert.

5. Drahtlos-Sender/Empfänger mit elektromagnetischer Induktion nach einem der vorhergehenden Ansprüche, der ferner Folgendes umfasst:

   einen Signaldetektor (A1), der konfiguriert ist, ein empfangenes Kommunikationssignal, das über ein weiteres empfangenes Magnetfeld, das an der magnetischen Antenne empfangen wird, und ein weiteres empfangenes elektrisches Feld, das an der elektrischen Antenne empfangen wird, geführt wird, zu detektieren.

6. Sender/Empfänger nach einem der vorhergehenden Ansprüche, wobei das erzeugte Magnetfeld (H3) und das erzeugte elektrische Feld (E3) durch dasselbe Spannungssignal erzeugt werden.

7. Sender/Empfänger nach einem der vorhergehenden Ansprüche, wobei der Sender/Empfänger in einer Hörgerätevorrichtung implementiert ist.

8. Sender/Empfänger nach einem der vorhergehenden Ansprüche, wobei der Sender/Empfänger in einer Handgelenkvorrichtung implementiert ist.

9. Drahtloskommunikationssystem mit elektromagnetischer Induktion, das einen Sender und einen Empfänger umfasst, wobei der Sender Folgendes umfasst:

   eine magnetische Antenne, die eine Spule (L1) umfasst;
   eine elektrische Antenne, die einen Kondensator (CE3) umfasst, der erste (P33) und eine zweite (P34) Platte enthält, wobei die Spule (L1) zu dem Kondensator (CE3) parallelgeschaltet ist, wobei die erste Platte (P33) benachbart zu einem ersten lebenden Körper (BODY1) positioniert und mit ihm gekoppelt sein kann;

eine Signalquelle, die konfiguriert ist, ein erzeugtes Kommunikationssignal zu produzieren, das verwendet wird, um die magnetische Antenne anzusteuern, ein erzeugtes Magnetfeld (H3) zu produzieren, und die elektrische Antenne anzusteuern, ein erzeugtes elektrisches Feld (E3) zu produzieren; und

wobei der Sender ferner einen Abstimmkondensator (C1) umfasst, der mit einer Antennenkombination gekoppelt ist, der konfiguriert ist, die Antennenkombination abzustimmen, wobei die Antennenkombination die magnetische Antenne und die elektrische Antenne enthält,

wobei der Sender, wenn er benachbart zu dem ersten lebenden Körper (BODY1) positioniert und mit ihm gekoppelt ist, konfiguriert ist, mit dem Empfänger des Drahtloskommunikationssystems mit elektromagnetischer Induktion zu kommunizieren, wenn der Empfänger benachbart zu einem zweiten lebenden Körper (BODY2) positioniert und mit ihm gekoppelt ist,

wobei der erste (BODY1) und der zweite (BODY2) lebende Körper über magnetische und elektrische Nahfeldkopplung gekoppelt sind,

wobei das erzeugte elektrische Feld (E3) mit dem ersten lebenden Körper (BODY1) gekoppelt ist und dadurch ein empfangenes elektrisches Feld (E4) bei dem Empfänger und ein empfangenes magnetisches Feld (H4) bei dem Empfänger produziert; und

wobei der Empfänger Folgendes umfasst:

eine zweite magnetische Antenne, die eine zweite Spule (L2) umfasst;

eine zweite elektrische Antenne, die einen zweiten Kondensator (CE2) umfasst, der erste (P43) und zweite (P44) Platten enthält, wobei die zweite Spule (L2) zu dem zweiten Kondensator (CE2) parallelgeschaltet ist, wobei die erste Platte (P43) des zweiten Kondensators (CE2) benachbart zu dem zweiten lebenden Körper (BODY2) positioniert und mit ihm gekoppelt sein kann; und

einen Signaldetektor (A1), der konfiguriert ist, ein empfangenes Kommunikationssignal von dem Sender über das empfangene Magnetfeld (H4), das durch die zweite magnetische Antenne empfangen wird, und das empfangene elektrische Feld (E4), das durch die zweite elektrische Antenne empfangen wird, durch Koppeln der ersten Platte (P43) des zweiten Kondensators (CE2) mit dem zweiten lebenden Körper (BODY2) empfangen wird, zu detektieren, und

wobei die zweite Spule (L2) konfiguriert ist, das empfangene Magnetfeld (H4) zu empfangen.

10. System nach Anspruch 9, wobei keine galvanische Verbindung zwischen dem Sender und Masse vorhanden ist.

11. System nach Anspruch 9 oder Anspruch 10, wobei der Sender ferner Folgendes umfasst:

eine Spannungssteuereinheit, die mit der Signalquelle (S1) gekoppelt ist, die konfiguriert ist, eines aus einer Amplitudendifferenz, einer Phasendifferenz und einer Amplituden- und einer Phasendifferenz zwischen den Kommunikationssignalen, die verwendet werden, um die magnetische Antenne und die elektrische Antenne anzusteuern, zu produzieren; und

eine Steuereinheit, die eine Datenverarbeitungseinheit und eine Signalverarbeitungseinheit enthält, wobei die Steuereinheit den Betrieb der Spannungssteuereinheit steuert.

12. System nach einem der Ansprüche 9-11, wobei der Empfänger ferner einen Abstimmungskondensator (C2) umfasst, der mit einer Antennenkombination gekoppelt ist, der konfiguriert ist, die Antennenkombination abzustimmen, wobei die Antennenkombination die zweite magnetische Antenne und die zweite elektrische Antenne enthält.

13. System nach einem der Ansprüche 9-12, wobei keine galvanische Verbindung zwischen dem Empfänger und Masse vorhanden ist.

14. System nach Anspruch 11, wobei:
die Signalquelle (S1) einen ersten Signalgenerator und einen zweiten Signalgenerator (S2) umfasst, wobei der erste und der zweite Signalgenerator konfiguriert sind, ein symmetrisches Spannungssignal zu erzeugen, das an die magnetische Antenne angelegt ist.

15. System nach Anspruch 14, wobei die Spannungssteuereinheit konfiguriert ist, ein zweites Spannungssignal basierend auf dem symmetrischen Spannungssignal zu erzeugen, wobei das zweite Spannungssignal an die elektrische Antenne angelegt ist.

**EP 3 139 816 B1**

**Revendications**

1. Émetteur-récepteur sans fil par induction électromagnétique comprenant :

   une antenne magnétique comprenant une bobine (L1) ;
   une antenne électrique comprenant un condensateur (CE3) comportant des première (P33) et seconde (P44) plaques, la bobine (L1) étant connectée en parallèle avec le condensateur (CE3), la première plaque (P33) pouvant être positionnée de manière adjacente et couplée à un premier corps vivant (BODY1) ; et
   une source de signal (S1) configurée pour produire un signal de communication généré utilisé pour entraîner l'antenne magnétique afin de produire un champ magnétique généré (H3) et pour entraîner l'antenne électrique afin de produire un champ électrique généré (E3),
   l'émetteur-récepteur comprenant en outre un condensateur d'accord (C1) couplé à une combinaison d'antennes configurée pour accorder la combinaison d'antennes, la combinaison d'antennes comprenant l'antenne magnétique et l'antenne électrique,
   l'émetteur-récepteur, lorsqu'il est positionné de manière adjacente et couplée au premier corps vivant (BODY1), étant configuré pour communiquer avec un autre émetteur-récepteur sans fil par induction électromagnétique, de manière adjacente et couplée à un second corps vivant (BODY2),
   les premier (BODY1) et second (BODY2) corps vivants étant reliés par un couplage de champ proche magnétique et électrique, produisant ainsi :

   un champ électrique reçu (E4) au niveau de l'autre émetteur-récepteur, et
   un champ magnétique reçu (H4) au niveau de l'autre émetteur-récepteur.

2. Émetteur-récepteur selon la revendication 1, dans lequel il n'y a pas de connexion galvanique entre l'émetteur-récepteur et la terre.

3. Émetteur-récepteur selon n'importe quelle revendication précédente, comprenant en outre une unité de commande de tension couplée à la source de signal (S1) configurée pour produire une différence parmi une différence d'amplitude, une différence de phase, et une différence d'amplitude et de phase entre les signaux de communication utilisés pour entraîner l'antenne magnétique et l'antenne électrique.

4. Émetteur-récepteur selon la revendication 3, comprenant en outre un dispositif de commande comprenant une unité de traitement de données et une unité de traitement de signaux, le dispositif de commande commandant le fonctionnement de l'unité de commande de tension.

5. Émetteur-récepteur sans fil par induction électromagnétique selon n'importe quelle revendication précédente, comprenant en outre :
   un détecteur de signal (A1) configuré pour détecter un signal de communication reçu transporté via un autre champ magnétique reçu, reçu sur l'antenne magnétique et un autre champ électrique reçu, reçu sur l'antenne électrique.

6. Émetteur-récepteur selon n'importe quelle revendication précédente, le champ magnétique généré (H3) et le champ électrique généré (E3) étant générés par un même signal de tension.

7. Émetteur-récepteur selon n'importe quelle revendication précédente, l'émetteur-récepteur étant mis en œuvre dans un dispositif d'aide auditive.

8. Émetteur-récepteur selon n'importe quelle revendication précédente, l'émetteur-récepteur étant mis en œuvre dans un dispositif de poignet.

9. Système de communication sans fil par induction électromagnétique comprenant un émetteur et un récepteur, l'émetteur comprenant :

   une antenne magnétique comprenant une bobine (L1) ;
   une antenne électrique comprenant un condensateur (CE3) comportant des première (P33) et seconde (P34) plaques, la bobine (L1) étant connectée en parallèle avec le condensateur (CE3), la première plaque (P33) pouvant être positionnée de manière adjacente et couplée à un premier corps vivant (BODY1) ;
   une source de signal configurée pour produire un signal de communication généré utilisé pour entraîner l'antenne magnétique à produire un champ magnétique généré (H3) et pour entraîner l'antenne électrique à produire un

14

champ électrique généré (E3) ; et

l'émetteur comprenant en outre un condensateur d'accord (C1) couplé à une combinaison d'antennes, configuré pour accorder la combinaison d'antennes, la combinaison d'antennes comprenant l'antenne magnétique et l'antenne électrique,

l'émetteur, lorsqu'il est positionné de manière adjacente et couplée au premier corps vivant (BODY1), étant configuré pour communiquer avec le récepteur du système de communication sans fil par induction électromagnétique, lorsque le récepteur est positionné de manière adjacente et couplée à un second corps vivant (BODY2), les premier (BODY1) et second (BODY2) corps vivants étant reliés par un couplage magnétique et électrique en champ proche,

le champ électrique généré (E3) étant couplé au premier corps vivant (BODY1), produisant ainsi un champ électrique reçu (E4) au niveau du récepteur, et

un champ magnétique reçu (H4) au niveau du récepteur ; et le récepteur comprenant :

une seconde antenne magnétique comprenant une seconde bobine (L2) ;

une seconde antenne électrique comprenant un second condensateur (CE2) incluant des première (P43) et seconde (P44) plaques, la seconde bobine (L2) étant connectée en parallèle avec le second condensateur (CE2), la première plaque (P43) du second condensateur (CE2) pouvant être positionnée de manière adjacente et couplée au second corps vivant (BODY2) ; et

un détecteur de signal (A1) configuré pour détecter un signal de communication reçu de l'émetteur via le champ magnétique (H4) reçu par la seconde antenne magnétique, et le champ électrique (E4) reçu par la seconde antenne électrique, en couplant la première plaque (P43) du second condensateur (CE2) au second corps vivant (BODY2), et

la seconde bobine (L2) étant configurée pour recevoir le champ magnétique reçu (H4).

10. Système selon la revendication 9, dans lequel il n'y a pas de connexion galvanique entre l'émetteur et la terre.

11. Système selon la revendication 9 ou la revendication 10, l'émetteur comprenant en outre ;
une unité de commande de tension couplée à la source de signal (S1) configurée pour produire une différence parmi une différence d'amplitude, une différence de phase, et une différence d'amplitude et de phase entre les signaux de communication utilisés pour entraîner l'antenne magnétique et l'antenne électrique ; et
un dispositif de commande comprenant une unité de traitement de données et une unité de traitement de signaux, le dispositif de commande commandant le fonctionnement de l'unité de commande de tension.

12. Système selon l'une quelconque des revendications 9 à 11, le récepteur comprenant en outre un condensateur d'accord (C2) couplé à une combinaison d'antennes configurée pour accorder la combinaison d'antennes, la combinaison d'antennes comprenant la seconde antenne magnétique et la seconde antenne électrique.

13. Système selon l'une quelconque des revendications 9 à 12, dans lequel il n'y a pas de connexion galvanique entre le récepteur et la terre.

14. Système selon la revendication 11,
la source de signal (S1) comprenant un premier générateur de signal et un second générateur de signal (S2), les premier et second générateurs de signal étant configurés pour générer un signal de tension équilibré appliqué à l'antenne magnétique.

15. Système selon la revendication 14, l'unité de commande de tension étant configurée pour produire un second signal de tension sur la base du signal de tension équilibré, le second signal de tension étant appliqué à l'antenne électrique.

FIG. 1

FIG. 2

FIG. 3

FIG. 4

523  525

ELECTROMAGNETIC INDUCTION

RANGE
PARALLEL

521

MAGNETIC INDUCTION

RANGE
COAXIAL

511

519

517  FIG. 5  515  513

615

613

617

619

P11

611  FIG. 6

FIG. 7

INTERFACE

BODY 1    BODY 2

E3    CE3    CE4    E4

Tx    Rx

L1    M    L2

H3    H4

FIG. 8

P33    INTERFACE

P34    CP3

CE3    P43    P44

CP4

CE4

FIG. 9

FIG. 10

FIG. 11

5cm OR 15cm DISTANCE

FIG. 12

**EP 3 139 816 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6211799 B1, Post
- EP 2019993 B1
- US 27001314